Europäisches Patentamt

European Patent Office

Office européen des brevets

(19)

(11) **EP 1 578 035 A1**

(12) **EUROPEAN PATENT APPLICATION**
published in accordance with Art. 158(3) EPC

(43) Date of publication:
**21.09.2005 Bulletin 2005/38**

(51) Int Cl.⁷: **H04B 7/26**

(21) Application number: **03780815.1**

(86) International application number:
**PCT/JP2003/016139**

(22) Date of filing: **17.12.2003**

(87) International publication number:
**WO 2004/059883 (15.07.2004 Gazette 2004/29)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **26.12.2002 JP 2002376706**

(71) Applicant: **MATSUSHITA ELECTRIC INDUSTRIAL
CO., LTD.
Osaka 571-8501 (JP)**

(72) Inventors:
• YOSHII, Isamu
  Urayasu-shi, Chiba 279-0014 (JP)
• UEHARA, Toshiyuki
  Yokohama-shi, Kanagawa 232-0011 (JP)
• NISHIO, Akihiko
  Yokosuka-shi, Kanagawa 239-0846 (JP)

(74) Representative: **Grünecker, Kinkeldey,
Stockmair & Schwanhäusser Anwaltssozietät
Maximilianstrasse 58
80538 München (DE)**

(54) **TRANSMISSION POWER DECIDING APPARATUS AND TRANSMISSION POWER DECIDING METHOD**

(57) In a multimedia broadcast/multicast service, in order to control the ratio of mobile stations capable of receiving information with high quality among mobile stations existing in a cell, a modulation section modulates a first layer code string and second layer code string having hierarchically different error rates into a symbol including both layer code strings, a target value storage section stores a target value corresponding to the ratio of high quality mobile stations which receive both the first layer code string and second layer code string without errors, a transmit power determining section determines to increase transmit power when the ratio of high quality mobile stations calculated by a ratio calculation section is less than a target value stored in the target value storage section and a transmit power control section increases transmit power of the modulated symbol according to the determination.

FIG.3

EP 1 578 035 A1

**Description**

Technical Field

The present invention relates to a transmit power determining apparatus and transmit power determining method used in a mobile communication system.

Background Art

In the field of mobile communications, technological studies on a multimedia broadcast/multicast service (hereinafter referred to as "MBMS") are being carried forward recently (e.g., see "3GPP TS 22.146 V6.0.0 (2002-06): 3rd Generation Partnership Project; Technical Specification Group Services and System Aspects; Multimedia Broadcast/Multicast Service; Stage 1 (Release 6) June 2002"). A communication carried out in an MBMS is not a one-to-one (Point to Point: P-to-P) communication but one-to-multi (Point to Muiti: P-to-M) communication. That is, in the MBMS, one base station sends the same information (e.g., music data, video image data, etc.) to a plurality of mobile stations simultaneously.

The MBMS has a broadcast mode and multicast mode. While the broadcast mode is a mode in which information is sent to all mobile stations as with current radio broadcasting, the multicast mode is a mode in which information is sent to only specific mobile stations affiliating a news group or other services.

Advantages in carrying out the MBMS include the following: That is, when each mobile station uses one channel and receives information sent from a base station through a streaming service, etc., if the number of mobile stations requesting the information increases, the load on the radio channel increases. However, when the MBMS is used, even if the number of mobile stations increases, all those mobile stations receive the information using the same channel, and therefore it is possible to increase the number of mobile stations capable of receiving the information without increasing the load on the radio channel. Currently, distribution of traffic information, music distribution, news distribution at a station, distribution of live coverage of a sport event, etc. , are considered as services available using the MBMS and providing these services at a transmission rate of approximately 8 to 256 kbps is under study.

Furthermore, there is a study on an MBMS that concerning transmit power of information, a base station apparatus sends information to a mobile station located on a cell boundary with transmit power that guarantees minimum quality.

Here, in the MBMS, in the case where the base station apparatus sends information to a mobile station located on a cell boundary with transmit power that guarantees minimum quality, a mobile station located far from the base station apparatus such as a mobile station located on a cell boundary can receive only information of low quality. However, when advertisement information on advertisement of a product is sent using the MBMS, the advertiser may want even mobile stations located far from the base station apparatus to receive the information with relatively high quality and may want to increase the ratio of mobile stations, among mobile stations existing in the cell, that can receive the information with high quality.

Disclosure of Invention

It is an object of the present invention to provide a transmit power determining apparatus and transmit power determining method in an MBMS capable of controlling the ratio of mobile stations, among mobile stations existing in the cell, that can receive the information with high quality.

The present invention carries out transmit power control on a symbol including a plurality of code strings whose error rate varies hierarchically according to the ratio of mobile stations, among mobile stations existing in a cell, which receive information with high quality. In this way, it is possible to keep the ratio of mobile stations, among mobile stations existing in the cell, capable of receiving information with high quality to a desired level.

Brief Description of Drawings

FIG.1 is a block diagram showing a configuration of a base station apparatus according to Embodiment 1 of the present invention;
FIG.2 is a block diagram showing a configuration of a mobile station according to Embodiment 1 of the present invention;
FIG. 3 illustrates a transmitting condition of a code string according to Embodiment 1 of the present invention;
FIG.4 is a block diagram showing a configuration of a mobile station according to Embodiment 2 of the present invention;

FIG.5 is a block diagram showing a configuration of a base station apparatus according to Embodiment 2 of the present invention;

FIG.6 illustrates a method of determining transmit power according to Embodiment 2 of the present invention;

FIG.7 is a block diagram showing a configuration of amobile station according to Embodiment 3 of the present invention;

FIG.8 is a block diagram showing a configuration of a mobile station according to Embodiment 4 of the present invention;

FIG.9 is a block diagram showing a configuration of a base station apparatus according to Embodiment 4 of the present invention; and

FIG.10 illustrates a result of ranking according to Embodiment 4 of the present invention.

Best Mode for Carrying out the Invention

With reference now to the attached drawings, embodiments of the present invention will be explained in detail below.

(Embodiment 1)

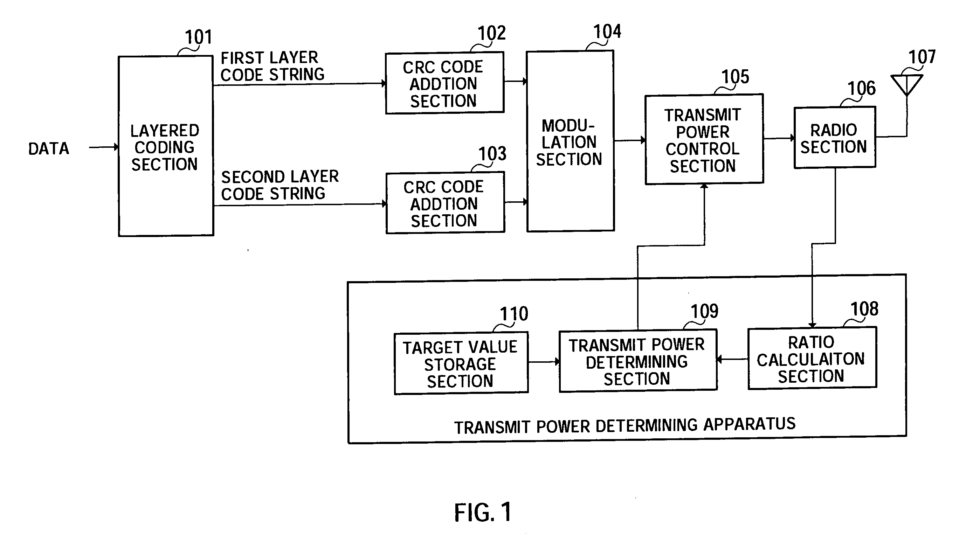

FIG.1 is a block diagram showing a configuration of a base station apparatus according to Embodiment 1 of the present invention. The base station apparatus shown in FIG.1 is used in a system in which an MBMS is performed and designed to send a symbol of the same contents to a plurality of mobile stations. This base station apparatus is constructed of a layered coding section 101, a CRC (Cyclic Redundancy Check) code addition section 102, a CRC code addition section 103, a modulation section 104, a transmit power control section 105, a radio section 106, an antenna 107, a ratio calculation section 108, a transmit power determining section 109 and a target value storage section 110. Furthermore, a transmit power determining apparatus is constructed of the ratio calculation section 108, transmit power determining section 109 and target value storage section 110.

The layered coding section 101 carries out coding on input data by dividing the data into two layers and obtains a first layer code string and a second layer code string. The first layer code string is a minimum necessary code string for a mobile station to obtain decoded data through decoding. Thus, the first layer may be called a "base layer." Furthermore, the second layer code string is a code string additional to the first layer code string and a code string necessary for the mobile station to obtain decoded data of high quality through decoding. Thus, the second layer may be called an "enhanced layer." The mobile station, which is the receiving side, carries out decoding using both the first layer code string and second layer code string or using only the first layer code string. That is, when decoding is performed using both the first layer code string and second layer code string, it is possible to obtain decoded data of higher quality compared to a case where decoding is performed using only the first layer code string.

Furthermore, the layered coding section 101 performs coding on data in such a way that the error rate differs hierarchically between the first layer code string and second layer code string. That is, it performs coding in such a way that the first layer code string is less likely to make errors than the second layer code string (that is, the error rate of the first layer code string becomes smaller than the error rate of the second layer code string). For this purpose, the layered coding section 101 makes a coding rate of the first layer code string smaller than a coding rate of the second layer code string.

Furthermore, suppose both the first layer code string and second layer code string are code strings having a transmission rate of 32 kbps, for example. Furthermore, suppose 32 kbps is the transmission rate that should be guaranteed at minimum by the MBMS. Therefore, when the mobile station performs decoding using both the first layer code string and second layer code string, decoded data of a transmission rate as high as 64 kbps is obtained and when the mobile station performs decoding using only the first layer code string, decoded data of a transmission rate of 32 kbps that should be guaranteed at minimum is obtained.

The first layer code string is input to the CRC code addition section 102 and a CRC code for an error check is added thereto at intervals of predetermined blocks. Furthermore, the second layer code string is input to the CRC code addition section 103 and a CRC code for an error check is added thereto at intervals of predetermined blocks. The first layer code string and second layer code string provided with CRC codes are input to the modulation section 104.

The modulation section 104 modulates the first layer code string and second layer code string into a symbol. For example, when 16QAM is used as a modulation scheme, one symbol consists of 4 bits, and therefore the modulation section 104 performs modulation with the respective bits of the first layer code string assigned to higher 2 bits of one symbol and the respective bits of the second layer code string assigned to lower 2 bits of one symbol.

The transmit power control section 105 controls transmit power of the modulated symbol according to the determination at the transmit power determining section 109. A specific method of determining transmit power will be described later.

The symbol after the transmit power control is subjected to radio processing such as up-conversion at the radio section 106 and sent to a plurality of mobile stations simultaneously through the antenna 107 using an FACH (ForwardAccess Channel) or DSCH (Downlink Shared Channel). That is, an MBMS is performed from the base station apparatus to a plurality of mobile stations.

Since one symbol includes both the first layer code string and second layer code string, the transmit power of the first layer code string is substantially equal to the transmit power of the second layer code string. Furthermore, the FACH is a downlink shared channel direction and used to transmit control information and user data. The FACH is shared by a plurality of mobile stations and used for relatively low-rate data transmission from a higher layer, etc. On the other hand, the DSCH is a downlink shared channel and used to transmit packet data. The DSCH is shared by a plurality of mobile stations and mainly used for relatively high-rate data transmission.

The ratio calculation section 108 receives ACK (ACKnowledgment: positive response) signals and NACK (NegativeACKnowledgment: negative response) signals received from a plurality of mobile stations through the antenna 107 after being subjected to radio processing such as down-conversion at the radio section 106. Then, the ratio calculation section 108 calculates a ratio of mobile stations which have successfully received both the first layer code string and second layer code string without errors out of all mobile stations in the own cell, that is, the ratio of mobile stations (high quality mobile stations) which have sent back ACK signals corresponding to the second layer code string. Based on this ratio, the transmit power determining section 109 determines transmit power of the symbol. A specific method of determining transmit power will be described later.

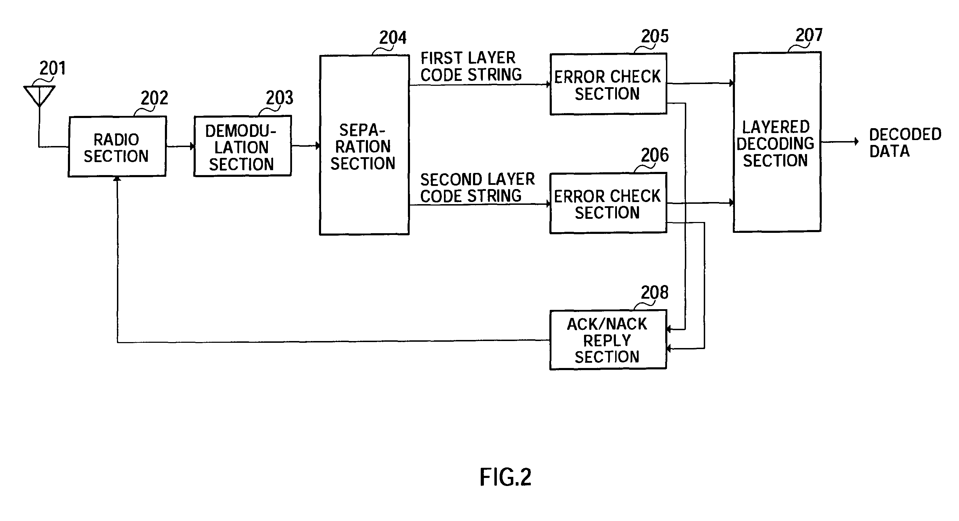

FIG.2 is a block diagram showing a configuration of a mobile station according to Embodiment 1 of the present invention. The mobile station shown in FIG.2 is constructed of an antenna 201, a radio section 202, a demodulation section 203, a separation section 204, an error check section 205, an error check section 206, a layered decoding section 207 and anACK/NACK reply section 208.

The radio section 202 applies radio processing such as down-conversion on a symbol received through the antenna 201 and inputs the received symbol to the demodulation section 203.

The demodulation section 203 demodulates the received symbol according to the modulation scheme of the base station. For example, when the base station uses 16QAM as the modulation scheme, the demodulation section 203 demodulates the received symbol using a 16QAM demodulation scheme. The demodulated symbol is input to the separation section 204.

Since each symbol demodulated by the demodulation section 203 consists of 4 bits, the separation section 204 separates the 4 bits into higher 2 bits and lower 2 bits. Since the first layer code string is assigned to the higher 2 bits and the second layer code string is assigned to the lower 2 bits as described above, this separation causes the 4 bits to be separated into the first layer code string and second layer code string. The first layer code string is input to the error check section 205 and the second layer code string is input to the error check section 206.

The error check section 205 carries out a CRC at intervals of predetermined blocks to check whether the first layer code string contains errors or not. When an error is detected, the error check section 205 discards the code string included in the block. On the other hand, when no error is detected, the error check section 205 inputs the code string included in the block to the layered decoding section 207. Furthermore, the error check section 205 inputs the CRC result (presence/absence of error) of the first layer code string to the ACK/NACK reply section 208.

The error check section 206 carries out a CRC at intervals of predetermined blocks to check whether the second layer code string contains errors or not. When there is an error, the error check section 206 discards the code string included in the block. On the other hand, when no error is detected, the error check section 206 inputs the code string included in the block to the layered decoding section 207. Furthermore, the error check section 206 inputs the CRC result (presence/absence of error) of the second layer code string to the ACK/NACK reply section 208.

When no error is detected in the first layer code string and second layer code string, the layered decoding section 207 receives both the first layer code string and second layer code string and carries out decoding using both the first layer code string and second layer code string. Thus, in this case, 64 kbps decoded data is obtained. Furthermore, when no error is detected in the first layer code string but an error is detected in the second layer code string, only the first layer code string is input, and therefore the layered decoding section 207 performs decoding using only the first layer code string. Therefore, in this case, 32 kbps decoded data is obtained.

Since coding is performed so that the error rate of the first layer code string becomes smaller than the error rate of the second layer code string as described above, there will be no such case where the first layer code string contains an error while the second layer code string contains no error under normal circumstances. In other words, when there is no error in the second layer code string, it is naturally estimated that there is no error in the first layer code string, either. If there should be a case where the first layer code string contains an error and the second layer code string contains no error, since the second layer code string is a code string additional to the first layer code string, the decoded data cannot be obtained using only the second layer code string. Moreover, when both the first layer code string and second layer code string contain an error, of course, no decoded data is obtained.

The ACK/NACK reply section 208 generates ACK signals or NACK signals for the first layer code string and second layer code string respectively according to the CRC results at the error check section 205 and error check section 206. That is, the ACK/NACK reply section 208 generates an ACK signal for the first layer code string when there is no error in the first layer code string and generates a NACK signal for the first layer code string when there is an error in the first layer code string. Furthermore, the ACK/NACK reply section 208 generates an ACK signal for the second layer code string when there is no error in the second layer code string and generates a NACK signal for the second layer code string when there is an error in the second layer code string. The ACK signals and NACK signals generated in this way are input to the radio section 202 and subjected to radio processing such as up-conversion at the radio section 202 and sent to the base station apparatus through the antenna 201. Since the base station apparatus sends the same symbol to a plurality of mobile stations, ACK signals/NACK signals for the first layer code string and ACK signals/NACK signals for the second layer code string are sent back from the plurality of mobile stations to the base station apparatus.

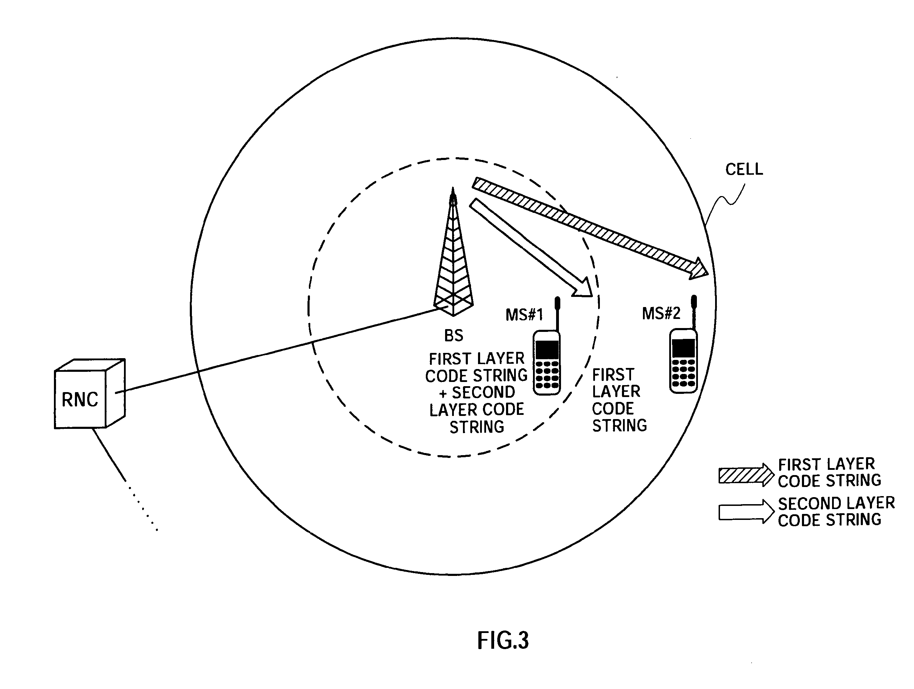

Here, as shown in FIG.3, suppose a case where an MBMS is performed when amobile station #1 (MS#1) is located near a base station apparatus (BS) and a mobile station #2 (MS#2) is located on a cell boundary. A radio channel control station (RNC) is connected to a plurality of base station apparatuses using cables, etc., supervises a radio zone made up of a plurality of cells and performs control on connections of radio channels. As shown above, the base station apparatus sends a first layer code string and second layer code string with different error rates and with the same transmit power to the mobile station #1 and the mobile station #2 simultaneously. Since the second layer code string has a lower characteristic of error rate than that of the first layer code string, even when the mobile station #1 and the mobile station #2 receive the same symbol, the mobile station #1 which is near the base station apparatus has a high possibility of receiving both the first layer code string and second layer code string without errors, whereas the mobile station #2 which is far from the base station apparatus has a high possibility that the first layer code string may be received without errors but the second layer code string may be received with an error. Thus, while the mobile station #1 can receive 64 kbps data, the mobile station #2 can receive 32 kbps data which is the minimum guaranteed transmission rate of the MBMS. Furthermore, the reception quality at the mobile station #1 is higher than the reception quality at the mobile station #2.

Next, a more specific method of determining transmit power will be explained below.

The ratio calculation section 108 in FIG.1 receives ACK signals/NACK signals of the first layer code string and ACK signals/NACK signals of the second layer code string sent back from the plurality of mobile stations. Then, the ratio calculation section 108 calculates the ratio of high quality mobile stations in the own cell according to the following expression (1):

$$\text{Ratio of high quality mobile stations}$$

$$= \text{number of ACK signals of second layer code string}$$

$$/\text{number of all mobile stations in own cell} \qquad (1)$$

Here, when there is no error in the second layer code string, it is naturally considered that there is no error in the first layer code string, either, and therefore in the expression (1), the ratio of high quality mobile stations is calculated using only ACK signals of the second layer code string without using ACK signals of the first layer code string.

In the above described expression (1), the number of all mobile stations in the own cell can be calculated as the total number of ACK signals and NACK signals sent back. Or since the total number of mobile stations in the own cell is already known at the radio channel control station, the ratio calculation section 108 of the base station apparatus can also be notified of the total number of mobile stations in the own cell from the radio channel control station. In this way, when the total number of mobile stations in the own cell is known at the radio channel control station, instead of sending back all the ACK signals/NACK signals of the first layer code string and ACK signals/NACK signals of the second layer code string, the ACK/NACK reply section 208 of the mobile station shown in FIG.2 can send back ACK signals and NACK signals of only the second layer code string or only ACK signals of the second layer code string. Furthermore, when the total number of mobile stations in the own cell is known, it is possible to know the number of ACK signals of the second layer code string by subtracting the total number of ACK signals and NACK signals of the first layer code string and NACK signals of the second layer code string from the total number of mobile stations, and therefore the ACK/NACK reply section 208 of the mobile station shown in FIG.2 may also send back the ACK signals/ NACK signals of the first layer code string and only NACK signals of the second layer code string.

The ratio of high qualitymobile stations calculated at the ratio calculation section 108 is input to the transmit power determining section 109. The transmit power determining section 109 compares the ratio of high quality mobile stations calculated by the ratio calculation section 108 with a desired ratio target value stored in the target value storage section 110. Then, transmit power is determined according to the comparison result.

That is, when the ratio of high quality mobile stations is smaller than the target value and only when the transmit power does not reach a preset upper limit of the transmit power, the transmit power determining section 109 determines to increase the transmit power of a symbol by a predetermined amount so as to increase the ratio of high quality mobile stations in the own cell and instructs the transmit power control section 105 to increase the transmit power of the symbol. The transmit power control section 105 increases the transmit power of the modulated symbol by a predetermined amount according to the instruction from the transmit power determining section 109.

On the other hand, when the ratio of high quality mobile stations is equal to or higher than the target value, the transmit power determining section 109 determines to decrease the transmit power of the symbol by a predetermined amount so as to decrease the ratio of high quality mobile stations in the own cell and instructs the transmit power control section 105 to decrease the transmit power of the symbol. The transmit power control section 105 decreases the transmit power of the modulated symbol from the current value by a predetermined amount according to the instruction from the transmit power determining section 109.

By performing transmit power control in an MBMS, this embodiment can keep the ratio of high quality mobile stations, in the own cell, that can receive both the first layer code string and second layer code string with different error rates without errors to a desired ratio.

(Embodiment 2)

This embodiment differs from Embodiment 1 in that transmit power is controlled not only based on the ratio of high quality mobile stations but also based on an instruction for an increase/decrease of transmit power from a mobile station.

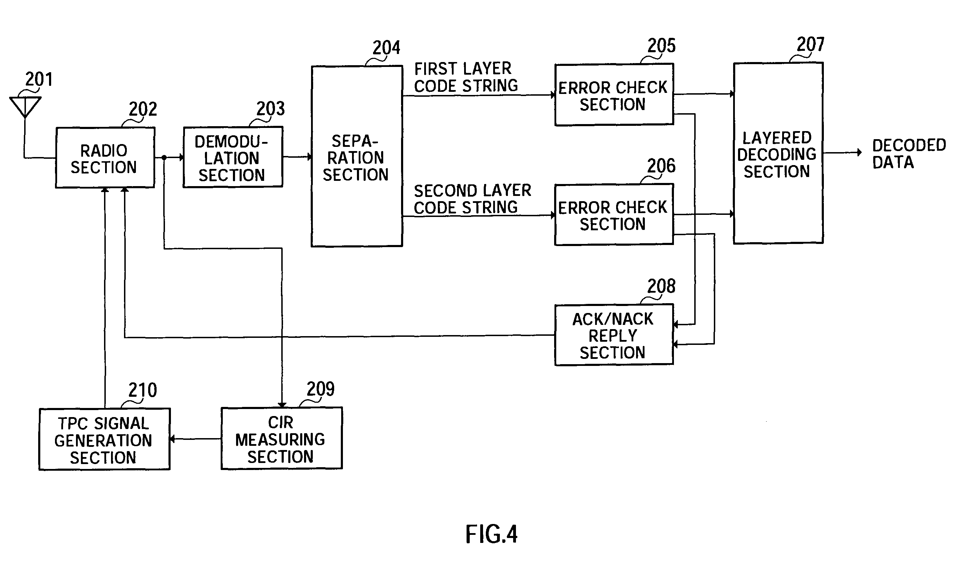

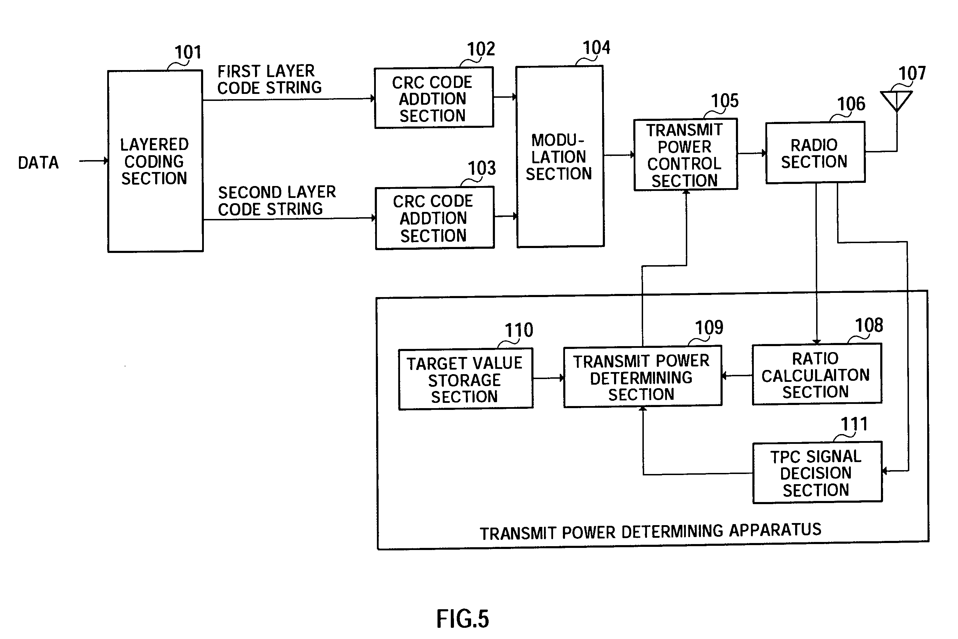

FIG.4 is a block diagram showing a configuration of a mobile station according to Embodiment 2 of the present invention. The mobile station shown in FIG.4 is constructed of the mobile station (FIG.2) of Embodiment 1 further provided with a CIR measuring section 209 and TPC (Transmission Power Control) signal generation section 210. FIG.5 is a block diagram showing a configuration of a base station according to Embodiment 2 of the present invention. The base station shown in FIG.5 is constructed of the base station (FIG.1) in Embodiment 1 with a TPC signal decision section 111 added to the transmit power determining apparatus. In the following explanations, detailed explanations of the same components as those in Embodiment 1 will be omitted.

In the mobile station shown in FIG.4, the CIR measuring section 209 measures a CIR (Carrier to Interference Ratio) as reception quality of a received symbol and inputs the CIR value to the TPC signal generation section 210. The TPC signal generation section 210 generates a TPC signal based on the input CIR value. More specifically, when the CIR measured at the CIR measuring section 209 is less than a predetermined CIR so as to obtain a transmission rate of 32 kbps that should be guaranteed at minimum, the TPC signal generation section 210 generates a TPC signal for instructing an increase of transmit power. On the other hand, when the CIR measured at the CIR measuring section 209 is equal to or greater than the predetermined CIR so as to obtain a transmission rate of 32 kbps that should be guaranteed at minimum, the TPC signal generation section 210 generates a TPC signal for instructing a decrease of transmit power. The TPC signal generated in this way is input to the radio section 202, subjected to radio processing such as up-conversion at the radio section 202 and then sent back to the base station through an antenna 201.

Since the base station sends the same symbol to a plurality of mobile stations, the base station shown in FIG. 5 receives TPC signals from a plurality of mobile stations. In FIG.5, a TPC signal received through the antenna 107 is subjected to radio processing such as down-conversion at a radio section 106 and then input to the TPC signal decision section 111.

The TPC signal decision section 111 decides whether transmit power should be increased or decreased based on the TPC signals from the plurality of mobile stations. When at least one of the plurality of mobile stations sends an instruction for an increase of transmit power, the TPC signal decision section 111 decides that transmit power should be increased. On the other hand, when all of the plurality of mobile stations sends instructions for a decrease of transmit power, the TPC signal decision section 111 decides that transmit power should be decreased. The decision result is input to a transmit power determining section 109.

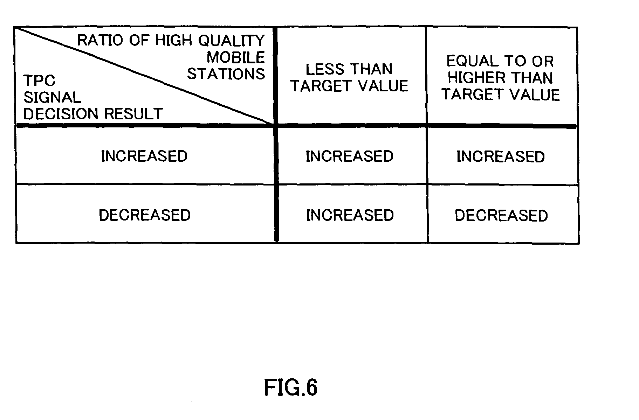

The transmit power determining section 109 determines transmit power of a modulated symbol as shown in FIG. 6. That is, when the ratio of high quality mobile stations is less than a target value, the transmit power determining section 109 determines to increase the transmit power of the symbol by a predetermined amount irrespective of the decision result at the TPC signal decision section 111.

On the other hand, when the ratio of high quality mobile stations is equal to or greater than the target value, the transmit power determining section 109 determines to increase or decrease transmit power according to the decision result at the TPC signal decision section 111. That is, when the TPC signal decision section 111 decides that the transmit power should be increased (that is, when at least one of the plurality of mobile stations sends an instruction for an increase of transmit power), the transmit power determining section 109 determines to increase the transmit power of the symbol by a predetermined amount, and on the contrary when the TPC signal decision section 111 decides that the transmit power should be decreased (that is, when all of the plurality of mobile stations send instructions for a decrease of transmit power), the transmit power determining section 109 determines to decrease the transmit power of the symbol by a predetermined amount.

This embodiment uses a CIR as reception quality, but the value used as indicative of reception quality is not limited to the CIR and reception power and SIR (Signal to Interference Ratio) can also be used. The same will apply to the following embodiments.

Furthermore, in this embodiment, a TPC signal is generated based on the CIR of a received symbol. The symbol may be a symbol sent from the base station using an FACH and DSCH or symbol such as a speech signal sent from the base station using a DPCH (Dedicated Physical Channel) . The DPCH is a channel in an uplink/downlink bidirectional channel and individually assigned to a mobile station. In this way, this embodiment performs control using a TPC signal, and can thereby keep the ratio of high quality mobile stations to a desired ratio more reliably.

(Embodiment 3)

This embodiment differs from Embodiment 1 in that an average value of BLERs (BLock Error Rate) measured at a plurality of mobile stations is calculated as the ratio of high quality mobile stations.

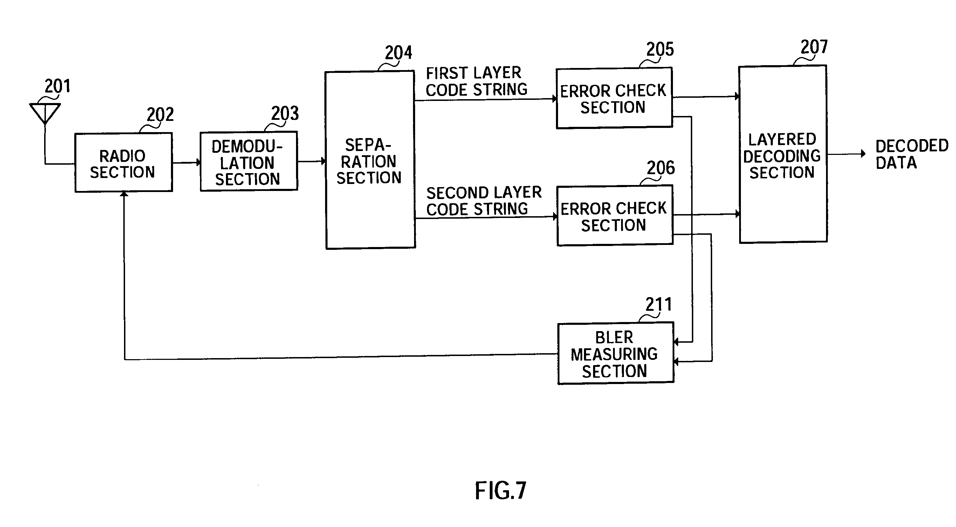

FIG.7 is a block diagram showing a configuration of a mobile station according to Embodiment 3 of the present invention. The mobile station shown in FIG.7 is constructed of the mobile station (FIG.2) in Embodiment 1 with the ACK/NACK reply section 208 replaced by a BLER measuring section 211. In the following explanations, detailed explanations of the same components as those in Embodiment 1 will be omitted.

An error check section 205 carries out a CRC at intervals of predetermined blocks to check whether there are any errors in the first layer code string or not. The error check section 205 inputs the CRC result (presence/absence of error) of the first layer code string to the BLER measuring section 211.

An error check section 206 carries out a CRC at intervals of predetermined blocks to check whether there are any errors in the second layer code string or not. Then, the error check section 206 inputs the CRC result (presence/absence of error) of the second layer code string to the BLER measuring section 211.

The BLER measuring section 211 measures the BLER of the first layer code string and the BLER of the second layer code string using the CRC results at the error check section 205 and error check section 206. BLER signals indicating the respective measured BLERs are input to a radio section 202, subjected to radio processing such as up-conversion at the radio section 202 and then sent back to the base station through an antenna 201. Since the same symbol is sent from the base station to a plurality of mobile stations, BLER signals of the first layer code string and BLER signals of the second layer code string are sent back to the base station from a plurality of mobile stations.

The configuration of the base station according to Embodiment 3 of the present invention is the same as that of Embodiment 1 (FIG.1). However, Embodiment 3 differs in the operations of the ratio calculation section 108 and transmit power determining section 109. Furthermore, the target value storage section 110 stores a target BLER beforehand.

According to this embodiment, the ratio calculation section 108 in FIG.1 receives BLER signals of the first layer code string and BLER signals of the second layer code string sent back from a plurality of mobile stations. Then, the ratio calculation section 108 calculates the ratio of high quality mobile stations in the own cell according to expression (2) below. That is, the ratio calculation section 108 calculates an average value of the BLERs of the second layer code string sent back from the plurality of mobile stations as a ratio of high quality mobile stations.

Ratio of high quality mobile stations

= total value of BLERs of second layer code string

/total number of mobile stations in the own cell　　　　　　　(2)

The average value of BLERs calculated by the ratio calculation section 108 is input to the transmit power determining section 109. The transmit power determining section 109 compares the average value of BLERs calculated at the ratio calculation section 108 with a target BLER stored in the target value storage section 110. Then, transmit power is determined according to the comparison result.

That is, when the average value of BLERs is less than the target BLER and only when the transmit power does not reach a preset upper limit of the transmit power, the transmit power determining section 109 determines to increase the transmit power of a symbol by a predetermined amount so as to increase the ratio of high quality mobile stations in the own cell and instructs the transmit power control section 105 to increase the transmit power of the symbol. The transmit power control section 105 increases the transmit power of the modulated symbol by a predetermined amount according to the instruction from the transmit power determining section 109.

On the other hand, when the average value of BLERs is equal to or greater than the target BLER, the transmit power determining section 109 determines to decrease the transmit power of the symbol by a predetermined amount so as to decrease the ratio of high quality mobile stations in the own cell and instructs the transmit power control section 105 to decrease the transmit power of the symbol. The transmit power control section 105 decreases the transmit power of the modulated symbol from the current value by a predetermined amount according to the instruction from the transmit power determining section 109.

In this way, this embodiment performs control using a BLER, and can thereby keep the ratio of high quality mobile stations to a desired ratio more reliably.

(Embodiment 4)

This embodiment differs from Embodiment 1 in that transmit power is determined based on reception quality notified from a mobile station.

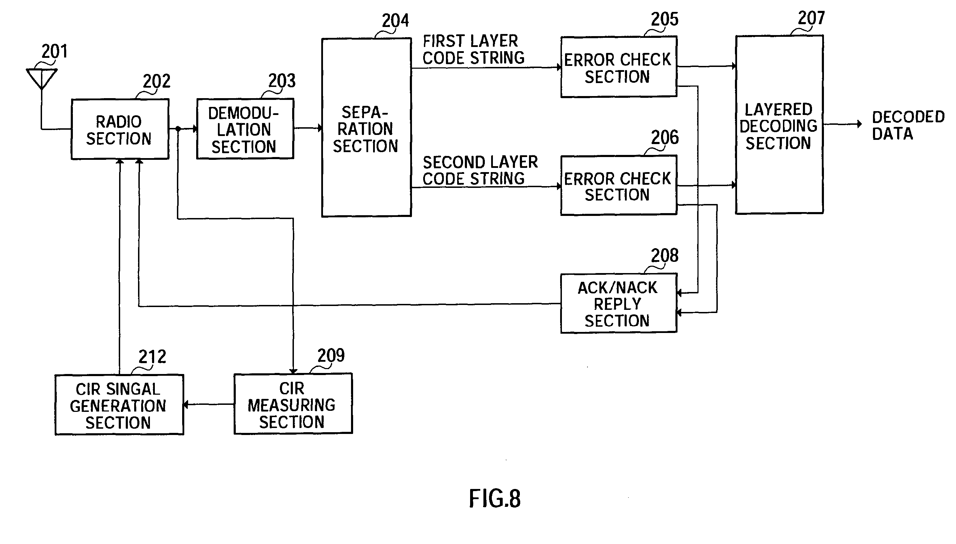

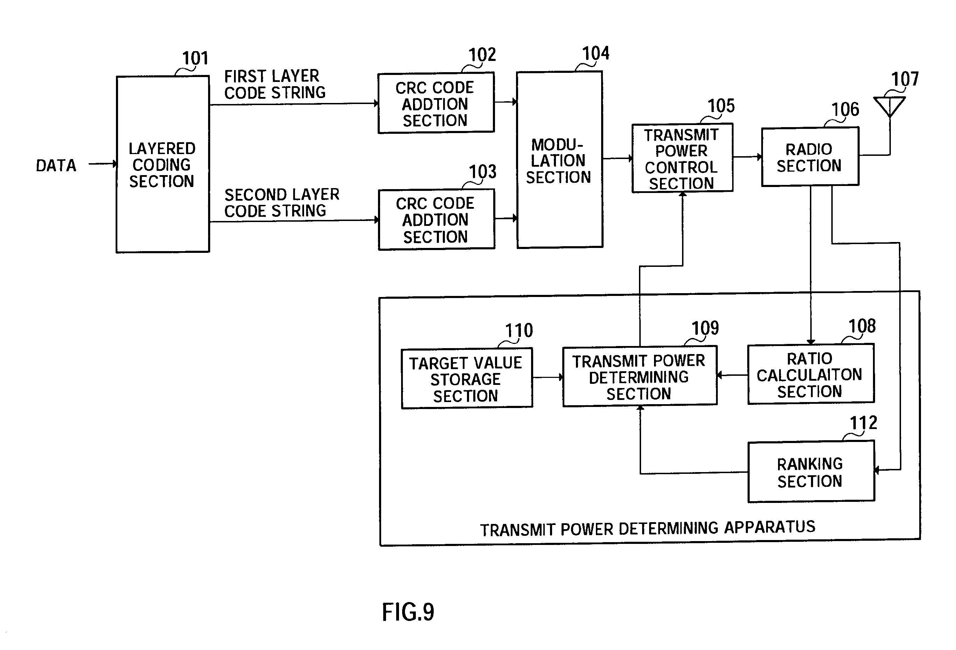

FIG.8 is a block diagram showing a configuration of a mobile station according to Embodiment 4 of the present invention. The mobile station shown in FIG.8 is constructed of the mobile station (FIG.2) in Embodiment 1 further provided with a CIR measuring section 209 and a CIR signal generation section 212. Furthermore, FIG.9 is a block diagram showing a conf iguration of a base station according to Embodiment 4 of the present invention. The base station shown in FIG.9 is constructed of the base station (FIG. 1) in Embodiment 1 with the transmit power determining apparatus further provided with a ranking section 112. In the following explanations, detailed explanations of the same components as those in Embodiment 1 will be omitted.

In the mobile station shown in FIG.8, an ACK/NACK reply section 208 generates ACK signals or NACK signals for the first layer code string and second layer code string respectively according to CRC results at an error check section 205 and an error check section 206. The ACK signals and NACK signals generated are input to a radio section 202 and subjected to radio processing such as up-conversion at the radio section 202 and sent back to the base station through an antenna 201.

The CIR measuring section 209 measures a CIR as indicative of reception quality of a received symbol and inputs the value to the CIR signal generation section 212. The CIR signal generation section 212 generates a CIR signal to notify the measured CIR. The CIR signal generated in this way is input to the radio section 202, subjected to radio processing such as up-conversion at the radio section 202 and sent back together with the ACK signal and NACK signal to the base station through the antenna 201.

Since the base station sends the same symbol to a plurality of mobile stations, the base station shown in FIG. 9 receives ACK signals/NACK signals of the first layer code string and ACK signals/NACK signals of the second layer code string and CIR signals from a plurality of mobile stations. In FIG.9, the ACK signals/NACK signals and CIR signals received through the antenna 107 are subjected to radio processing such as down-conversion at the radio section 106 and input to the ranking section 112.

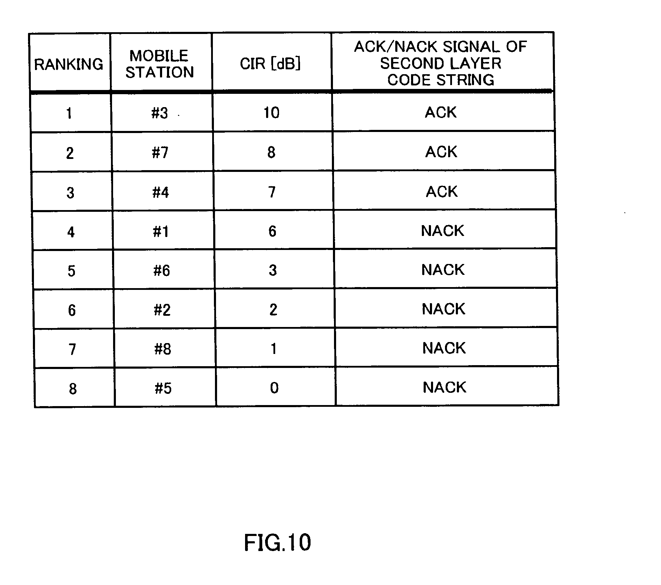

The ranking section 112 ranks CIRs notified from the plurality of mobile stations in descending order in magnitude, that is, in descending order of reception quality as shown in FIG. 10 in association with the ACK/NACK of the second layer code string. Then, the ranking section 112 inputs the ranking result to the transmit power determining section 109. Here, suppose that mobile stations existing in the own cell are eight mobile stations #1 to #8.

Furthermore, as in the case of Embodiment 1, the ratio of high quality mobile stations calculated at the ratio calculation section 108 is input to the transmit power determining section 109.

According to the ranking result, the transmit power determining section 109 determines to increase transmit power by a difference between the minimum CIR (CIR=7 [dB] of mobile station #4 in FIG.10) of CIRs of mobile stations which have sent back ACK signals of the second layer code string and the CIRs of mobile stations which have sent back NACK signals so as to match a desired ratio target value stored in the target value storage section 110.

More specifically, in FIG. 10, only three out of eight mobile stations have sent back ACK signals of the second layer code string, and therefore the current ratio of high quality mobile stations is 37.5%. When the target value stored in the target value storage section 110 is 50%, if one more mobile station sends back an ACK signal of the second layer code string, meaning that four out of the eight mobile stations have sent back ACK signals of the second layer code string, the ratio of high quality mobile stations reaches the target value. That is, in FIG.10, it is possible to cause the mobile station #1 to send back an ACK signal. Now, in FIG.10, it is the mobile station #4 that has notified the minimum CIR out of the mobile stations which have sent back ACK signals and the CIR is 7 [dB]. Therefore, from this ranking result, it is possible to regard 7 [dB] as the minimum necessary CIR so that the second layer code string is received without errors. Therefore, it is possible to regard 1 [dB] which is a difference between the CIR=7 [dB] of the mobile station #4 and the CIR=6 [dB] of the mobile station #1 as the amount of increase of transmit power necessary for also the mobile station #1 to send back an ACK signal. Therefore, the transmit power determining section 109 determines to increase the transmit power by 1 [dB]. Here, the mobile station #1 is considered as a target because the mobile station #1 is the mobile station of the best reception quality of all mobile stations which have sent NACK signals, which requires only a minimum amount of increase of transmit power necessary to send back an ACK signal of the second layer code string (that is, to ensure that the second layer code string is received without errors).

Furthermore, when the target value is 62.5%, if ACK signals of the second layer code string are sent back from two more mobile stations, meaning that ACK signals of the second layer code string have been sent back from five mobile stations out of eight mobile stations, the ratio of high quality mobile stations reaches the target value. That is, in FIG.10, it is possible to cause the mobile station #1 and mobile station #6 to also send back ACK signals. It is possible to regard 4 [dB] which is a difference between CIR=7 [dB] of the mobile station #4 and CIR=3 [dB] of the mobile station #6 as the amount of increase of transmit power required therefor. Thus, the transmit power determining section 109 determines to increase transmit power by 4 [dB].

Thus, this embodiment determines transmit power relatively according to a ranking result based on reception quality, and can thereby set transmit power that reaches a desired ratio of high quality mobile stations more quickly.

(Embodiment 5)

This embodiment is substantially the same as Embodiment 4 and differs from Embodiment 4 only in that the transmit power determining section 109 is preset with reception quality necessary to receive the second layer code string without errors.

The configurations of a mobile station and a base station according to this embodiment are the same as those of Embodiment 4 (FIG.8, FIG.9) and only the operation of the transmit power determining section 109 of the base station apparatus differs from that of Embodiment 4. The operation of the transmit power determining section 109 of this embodiment will be explained below.

According to a ranking result, the transmit power determining section 109 determines to increase transmit power by a difference between a CIR necessary to receive the second layer code string without errors and the CIR of a mobile station which has sent back a NACK signal so as to match a desired ratio target value stored in a target value storage section 110. The CIR necessary to receive the second layer code string without errors is measured beforehand and preset at the transmit power determining section 109.

More specifically, in FIG.10, ACK signals of the second layer code string are sent back from only three out of eight mobile stations, and therefore the ratio of high quality mobile stations is 37.5%. When the target value stored in the target value storage section 110 is 50%, if one more mobile station sends back an ACK signal of the second layer code string, meaning that four out of the eight mobile stations have sent back ACK signals of the second layer code string, the ratio of high quality mobile stations reaches the target value. That is, in FIG.10, it is possible to cause the mobile station #1 to also send back an ACK signal. Therefore, when the CIR preset at the transmit power determining section 109 is assumed to be CIR=7 [dB], the amount of increase of transmit power necessary therefor is 1 [dB] which is a difference between CIR=7 [dB] and the CIR=6 [dB] of the mobile station #1. Therefore, the transmit power determining section 109 determines to increase the transmit power by 1 [dB]. Here, the mobile station #1 is considered as a target because the mobile station #1 is the mobile station of the best reception quality of all mobile stations which have sent back NACK signals, which requires only a minimum amount of increase of transmit power necessary to send back an ACK signal of the second layer code string (that is, to ensure that the second layer code string is received without errors).

Furthermore, when the target value is 62.5%, if ACK signals of the second layer code string are sent back from two more mobile stations, meaning that ACK signals of the second layer code string have been sent back from five out of eight mobile stations, the ratio of high quality mobile stations reaches the target value. That is, in FIG.10, it is possible to cause the mobile station #1 and mobile station #6 to also send back ACK signals. The amount of increase of transmit power required therefor is 4 [dB] which is a difference between CIR=7 [dB] preset at the transmit power determining section 109 and CIR=3 [dB] of the mobile station #6. Thus, the transmit power determining section 109 determines to increase transmit power by 4 [dB].

In this way, this embodiment determines transmit power based on a ranking result based on reception quality and the absolute value of desired reception quality, and can thereby set transmit power which corresponds to a desired ratio of high qualitymobile stations with minimum wastage.

The above described embodiments have adopted a configuration in which a transmit power determining apparatus is provided for the base station and the base station determines transmit power. However, it is also possible to adopt a configuration in which the transmit power determining apparatus is provided for the radio channel control station instead of the base station and the radio channel control station determines transmit power and notifies the transmit power to the base station.

Furthermore, according to the above described embodiments, the base station performs hierarchical coding which is coding realized by dividing data into two layers. However, this hierarchical coding can also be performed by a radio channel control station or by a contents server connected to the radio channel control station. In this case, the first layer code string and second layer code string are output in parallel from the radio channel control station or contents server.

Furthermore, the above described embodiments perform hierarchical coding in two layers, but the present invention is not limited to two layers and can use any number of layers if the number of layers is at least two. When, for example, coding is performed in three layers, it is possible to use 64QAM (1 symbol consists of 6 bits) as the modulation scheme and perform modulation with a plurality of code strings coded in three layers of the error rate assigned to 2 bits per symbol as with the above described case.

As described above, in an MBMS, the present invention can control the ratio of mobile stations capable of receiving information with high quality among mobile stations existing in a cell.

This application is based on the Japanese Patent Application No.2002-376706 filed on December 26, 2002, entire content of which is expressly incorporated by reference herein.

Industrial Applicability

The present invention is applicable to a radio communication base station apparatus, radio channel control station and radio communication mobile station apparatus used in a mobile communication system.

[FIG.1]
DATA
101 LAYERED CODING SECTION
FIRST LAYER CODE STRING
SECOND LAYER CODE STRING
102 CRC CODE ADDTION SECTION
103 CRC CODE ADDTION SECTION
104 MODULATION SECTION
105 TRANSMIT POWER CONTROL SECTION
106 RADIO SECTION
110 TARGET VALUE STORAGE SECTION
109 TRANSMIT POWER DETERMINING SECTION
108 RATIO CALCULAITON SECTION
TRANSMIT POWER DETERMINING APPARATUS

[FIG.2]
202 RADIO SECTION
203 DEMODULATION SECTION
204 SEPARATION SECTION
FIRST LAYER CODE STRING
SECOND LAYER CODE STRING
205 ERROR CHECK SECTION
206 ERROR CHECK SECTION
208 ACK/NACK REPLY SECTION
207 LAYERED DECODING SECTION
DECODED DATA

[FIG.3]
CELL
FIRST LAYER CODE STRING + SECOND LAYER CODE STRING FIRST LAYER CODE STRING
CELL
FIRST LAYER CODE STRING
SECOND LAYER CODE STRING

[FIG.4]
202 RADIO SECTION
203. DEMODULATION SECTION
204 SEPARATION SECTION
FIRST LAYER CODE STRING

SECOND LAYER CODE STRING
205 ERROR CHECK SECTION
206 ERROR CHECK SECTION
208 ACK/NACK REPLY SECTION
207 LAYERED DECODING SECTION
DECODED DATA
210 TPC SIGNAL GENERATION SECTION
209 CIR MEASURING SECTION

[FIG.5]
DATA
101 LAYERED CODING SECTION
FIRST LAYER CODE STRING
SECOND LAYER CODE STRING
102 CRC CODE ADDTION SECTION
103 CRC CODE ADDTION SECTION
104 MODULATION SECTION
105 TRANSMIT POWER CONTROL SECTION
106 RADIO SECTION
110 TARGET VALUE STORAGE SECTION
109 TRANSMIT POWER DETERMINING SECTION
108 RATIO CALCULAITON SECTION
111 TPC SIGNAL DECISION SECTION
TRANSMIT POWER DETERMINING APPARATUS

[FIG.6]
RATIO OF HIGH QUALITY MOBILE STATIONS
TPC SIGNAL DECISION RESULT
LESS THAN TARGET VALUE
EQUAL TO OR HIGHER THAN TARGET VALUE
INCREASED INCREASED INCREASED
DECREASED INCREASED DECREASED

[FIG.7]
202 RADIO SECTION
203 DEMODULATION SECTION
204 SEPARATION SECTION
FIRST LAYER CODE STRING
SECOND LAYER CODE STRING
205 ERROR CHECK SECTION
206 ERROR CHECK SECTION
211 BLER MEASURING SECTION
207 LAYERED DECODING SECTION
DECODED DATA

[FIG.8]
202 RADIO SECTION
203 DEMODULATION SECTION
204 SEPARATION SECTION
FIRST LAYER CODE STRING
SECOND LAYER CODE STRING
205 ERROR CHECK SECTION
206 ERROR CHECK SECTION
208 ACK/NACK REPLY SECTION
207 LAYERED DECODING SECTION
DECODED DATA
212 CIR SINGAL GENERATION SECTION
209 CIR MEASURING SECTION

[FIG.9]
DATA
101 LAYERED CODING SECTION
FIRST LAYER CODE STRING
SECOND LAYER CODE STRING
102 CRC CODE ADDTION SECTION
103 CRC CODE ADDTION SECTION
104 MODULATION SECTION
105 TRANSMIT POWER CONTROL SECTION
106 RADIO SECTION
110 TARGET VALUE STORAGE SECTION
109 TRANSMIT POWER DETERMINING SECTION
108 RATIO CALCULAITON SECTION
112 RANKING SECTION
TRANSMIT POWER DETERMINING APPARATUS

[FIG.10]
RANKING
MOBILE STATION
ACK/NACK SIGNAL OF SECOND LAYER CODE STRING


**Claims**

1. A transmit power determining apparatus comprising:

   a determining section that determines transmit power of a symbol including a first layer code string and a second layer code string having hierarchically different error rates; and
   a storage section that stores a target value with respect to a ratio of mobile stations receiving both said first layer code string and said second layer code string without errors,

   wherein said determining section determines to increase transmit power of said symbol when said ratio is less than said target value.

2. The transmit power determining apparatus according to claim 1, wherein the error rate of said first layer code string is smaller than the error rate of said second layer code string, and
   said transmit power determining apparatus further comprises a ratio calculation section that calculates said ratio from the total number of mobile stations in the cell and the number of mobile stations which have received said second layer code string without errors.

3. The transmit power determining apparatus according to claim 1, wherein when said ratio is equal to or greater than said target value, said determining section determines to increase transmit power of said symbol when at least one of a plurality of mobile stations sends an instruction for increasing transmit power and determines to decrease transmit power of said symbol when all of the plurality of mobile stations send instructions for decreasing transmit power.

4. The transmit power determining apparatus according to claim 1, wherein the error rate of said first layer code string is smaller than the error rate of said second layer code string, and
   said transmit power determining apparatus further comprises a ratio calculation section that calculates an average value of BLERs of said second layer code string at a plurality of mobile stations as said ratio.

5. The transmit power determining apparatus according to claim 1, wherein the error rate of said first layer code string is smaller than the error rate of said second layer code string, and
   said determining section determines an amount of increase of transmit power of said symbol based on a difference between reception quality at a mobile station and reception quality necessary to receive said second layer code string without errors.

6. The transmit power determining apparatus according to claim 5, wherein said determining section regards the minimum reception quality of reception quality at mobile stations which have received said second layer code string without errors as the reception quality necessary to receive said second layer code string without errors.

7. A radio communication base station apparatus comprising the transmit power determining apparatus according to claim 1.

8. A radio channel control station apparatus comprising the transmit power determining apparatus according to claim 1.

9. A transmit power determining method for determining transmit power of a symbol including a first layer code string and a second layer code string having hierarchically different error rates, determining to increase transmit power of said symbol when the ratio of mobile stations that receive both said first layer code string and said second layer code string without errors is less than a desired target value.

FIG. 1

EP 1 578 035 A1

FIG.2

EP 1 578 035 A1

FIG.3

CELL

BS
FIRST LAYER
CODE STRING
+ SECOND
LAYER CODE
STRING

MS#1

MS#2

FIRST
LAYER
CODE
STRING

RNC

FIRST LAYER
CODE STRING

SECOND LAYER
CODE STRING

EP 1 578 035 A1

FIG.4

FIG.5

| | RATIO OF HIGH QUALITY MOBILE STATIONS / TPC SIGNAL DECISION RESULT | LESS THAN TARGET VALUE | EQUAL TO OR HIGHER THAN TARGET VALUE |
|---|---|---|---|
| | INCREASED | INCREASED | INCREASED |
| | DECREASED | INCREASED | DECREASED |

FIG.6

FIG.7

EP 1 578 035 A1

FIG.8

FIG.9

| RANKING | MOBILE STATION | CIR [dB] | ACK/NACK SIGNAL OF SECOND LAYER CODE STRING |
|---------|---------------|----------|---------------------------------------------|
| 1 | #3 | 10 | ACK |
| 2 | #7 | 8 | ACK |
| 3 | #4 | 7 | ACK |
| 4 | #1 | 6 | NACK |
| 5 | #6 | 3 | NACK |
| 6 | #2 | 2 | NACK |
| 7 | #8 | 1 | NACK |
| 8 | #5 | 0 | NACK |

FIG.10

## INTERNATIONAL SEARCH REPORT

International application No.

PCT/JP03/16139

**A. CLASSIFICATION OF SUBJECT MATTER**
Int.Cl$^7$ H04B7/26

According to International Patent Classification (IPC) or to both national classification and IPC

**B. FIELDS SEARCHED**

Minimum documentation searched (classification system followed by classification symbols)
Int.Cl$^7$ H04B7/24-7/26, H04Q7/00-7/38, H04L27/00, H04L1/00

Documentation searched other than minimum documentation to the extent that such documents are included in the fields searched
Jitsuyo Shinan Koho          1922-1996    Toroku Jitsuyo Shinan Koho    1994-2004
Kokai Jitsuyo Shinan Koho    1971-2004    Jitsuyo Shinan Toroku Koho    1996-2004

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2002-204273 A (Communications Research Laboratory), 19 July, 2002 (19.07.02), (Family: none) | 1-9 |
| A | JP 2001-339466 A (Oki Electric Industry Co., Ltd.), 07 December, 2001 (07.12.01), (Family: none) | 1-9 |
| A | JP 8-204768 A (Mitsubishi Electric Corp.), 09 August, 1996 (09.08.96), (Family: none) | 1-9 |

| ☒ Further documents are listed in the continuation of Box C. | ☐ See patent family annex. |
|---|---|

\* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 23 March, 2004 (23.03.04) | 13 April, 2004 (13.04.04) |

| Name and mailing address of the ISA/ Japanese Patent Office | Authorized officer |
|---|---|
| Facsimile No. | Telephone No. |

Form PCT/ISA/210 (second sheet) (July 1998)

**EP 1 578 035 A1**

## INTERNATIONAL SEARCH REPORT

| International application No. |
|---|
| PCT/JP03/16139 |

C (Continuation). DOCUMENTS CONSIDERED TO BE RELEVANT

| Category* | Citation of document, with indication, where appropriate, of the relevant passages | Relevant to claim No. |
|---|---|---|
| E,A | JP 2004-40661 A (Matsushita Electric Industrial Co., Ltd.), 05 February, 2004 (05.02.04), & WO 04/06469 A1 | 1-9 |

Form PCT/ISA/210 (continuation of second sheet) (July 1998)